(19) Europäisches Patentamt
European Patent Office
Office européen des brevets

(11) Veröffentlichungsnummer: **0 032 978**
**B1**

(12) # EUROPÄISCHE PATENTSCHRIFT

(45) Veröffentlichungstag der Patentschrift: **27.07.83**

(51) Int. Cl.³: **C 08 F 36/18**, C 09 J 3/12

(21) Anmeldenummer: **80106412.2**

(22) Anmeldetag: **21.10.80**

(54) **Polychloropren-Klebstoff mit verbesserter Topfzeit und seine Herstellung.**

(30) Priorität: **25.01.80 DE 3002734**

(43) Veröffentlichungstag der Anmeldung: **05.08.81 Patentblatt 81/31**

(45) Bekanntmachung des Hinweises auf die Patenterteilung: **27.07.83 Patentblatt 83/30**

(84) Benannte Vertragsstaaten: **BE DE FR GB IT NL**

(56) Entgegenhaltungen:
**DE-A-2 008 674**
**DE-A-2 144 097**
**DE-A-2 527 396**
**US-A-2 831 842**

(73) Patentinhaber: **BAYER AG, Zentralbereich Patente, Marken und Lizenzen, D-5090 Leverkusen 1, Bayerwerk (DE)**

(72) Erfinder: **Musch, Rüdiger, Dr., Altenberger Dom-Strasse 169, D-5060 Bergisch-Gladbach 2 (DE)**
Erfinder: **Hohmann, Gerhard, Dr., An der Steinrütsch 35, D-5090 Leverkusen (DE)**
Erfinder: **Konter, Wolfgang, Dr., Espenstrasse 49, D-4040 Neuss 21 (DE)**
Erfinder: **Nolte, Wilfried, Dr., Gronenborn C33, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 032 978 B1

Polychloropren-Klebstoff mit verbesserter Topfzeit und seine Herstellung

Die Erfindung betrifft ein Verfahren zur Herstellung eines Klebstoffs auf der Basis eines Polychloroprenklebstoffrohstoffes, der durch kontinuierliche Polymerisation von Chloropren in wäßriger Emulsion in Gegenwart geringer Emulgatormengen erhalten werden kann.

Die Polymerisation von Chloropren in wäßriger Emulsion ist seit langem bekannt und wird großtechnisch durchgeführt (vgl. z. B. Encyclopedia of Polymer Science and Technology, Bd. 3, Seiten 705–730, Interscience, 1965). Dieser radikalisch gesteuerte Polymerisationsprozeß verläuft sehr rasch unter starker Wärmeentwicklung. Die schnelle Abführung der Polymerisationswärme ist besonders dann schwierig, wenn eine niedrige Polymerisationstemperatur eingehalten werden soll und setzt ein gut funktionierendes Kühlsystem voraus.

Um die hohen Anforderungen, die an das Polymere und an die daraus hergestellten Klebstoffe gestellt werden, zu erfüllen, sind zahlreiche Vorschläge in der Patentliteratur erschienen. Schwierigkeiten entstehen jedoch bei der reproduzierbaren Herstellung von Polychloroprenen mit gleichbleibend hohem Qualitätsniveau. Aus diesem und aus wirtschaftlichen Gründen heraus ist es in der Praxis daher günstig, Chloropren in einer kontinuierlich arbeitenden Polymerisationsanlage zu polymerisieren.

Für die Herstellung von Klebstoffen wird Polychloropren in geeigneten Lösungsmittel gelöst. Bei der Lagerung der Klebstoffe ändert sich mit der Zeit das Fließverhalten der Klebstoffe, was sich insbesondere in einer ansteigenden Lösungsviskosität ausdrückt und zu einer erheblichen Beeinträchtigung der Verarbeitbarkeit führt. Diese Nachteile lassen sich beheben, wenn das Polymere z. B. auf der Walze mastiziert wird. Dieses Verfahren, ist zeitraubend und verursacht hohe Kosten.

Wie bekannt, hängen Rohmaterial- und Mischungseigenschaften der Polymeren von der Zusammensetzung der Emulgatoren und ihren Konzentrationen in der wäßrigen Emulsion ab. Ein hoher Emulgatorgehalt erhöht zwar die Polymerisationsgeschwindigkeit und verbessert die Latexstabilität, verschlechtert aber wesentliche Produkteigenschaften der Klebstoffe, wie z. B. Lagerstabilität und Topfzeit.

Es war daher wünschenswert, den Emulgatorgehalt bei der Polymerisation zu senken. Wie bekannt, sinkt jedoch bei verringertem Emulgatorgehalt die Polymerisationsgeschwindigkeit ab (F. Hölscher, Dispersionen synthetischer Hochpolymer, Teil I, Eigenschaften, Herstellung und Prüfung, Springer-Verlag, Berlin-Heidelberg-New York, 1969, S. 81 ff.). Bei kontinuierlicher Polymerisation bedeutet dies ein geringerer Monomerumsatz in der Polymerisationsanlage bei gleicher Verweilzeit. Der Monomerumsatz läßt sich bei gleicher Polymerisationstemperatur wieder anheben durch eine längere Verweilzeit der Emulsion in der Polymerisationsanlage oder durch höhere Aktivatordosierung, wobei in beiden Fällen Produktverschlechterungen in Kauf genommen werden müssen.

Die mittlere Verweilzeit ($V_z$) des polymerisierenden Chloroprens in der Kesselkaskade ist für einen gleichmäßigen störungsfreien Polymerisationsverlauf und für gleichförmig gute Produkteigenschaften des Polymerisats von großer Wichtigkeit. Sie wird aus der nachstehenden einfachen Formel ermittelt:

$$V_z = \frac{\Sigma V_k}{L} \text{ [h]}$$

$V_z$ Verweilzeit (h)

$\Sigma V_k$ Summe der Kesselvolumina der Polymerisationsanlage ($m^3$)

L Latexmenge, die pro Stunde anfällt ($m^3/h$)

Bei einer 7 Kessel-Kaskade liegt $V_z$ üblicherweise bei 2–4 Stunden. Bei langer Verweilzeit der Emulsion in der Konti-Anlage ($V_z > 5$ Stdn.), d. h., bei langsamer Polymerisation bilden sich neben dem gewünschten Chloropren-Polymerisat auch sog. Popcorn-Polymerisat. Man versteht darunter hochvernetzte, in organischen Lösungsmitteln unlösliche Produkte. Haben sich solche Popcorn-Keime einmal gebildet, wachsen sie durch Autokatalyse rasch an. In der Folge kommt es zu Verstopfungen in der Polymerisationsanlage, Umsatzüberschreitung und dadurch zu Polymerisation mit stark schwankenden Produkteigenschaften.

Bei einer zu kurzen Verweilzeit ($V_z < 2$ Stdn.) dagegen läßt sich die Polymerisationswärme nur schwierig abführen und es entstehen Produkte mit ungünstigen Rohmaterial- und Vulkanisateigenschaften. Die störungsfreie kontinuierliche Polymerisation von Chloropren zu Produkten mit hoher Qualität ist daher nur innerhalb einer bestimmten Verweilzeit möglich.

Diese kontinuierliche Polymerisation von Chloropren ist bekannt und bereits beschrieben worden, z. B. in den US-Patentschriften 2 384 277, 2 394 291 und 2 831 842.

Um bei der kontinuierlichen Polymerisationsweise die gleiche Reaktionsgeschwindigkeit wie beim Batch-Ansatz zu erreichen, muß entweder mehr Emulgator eingesetzt werden, oder wie im US-A 2 394 291 beschrieben, wesentlich mehr Aktivatorlösung eindosiert werden. Dies führt jedoch zu Ausscheidungen im Polymerisations- und Entgasungstrakt der Polymerisationsanlage.

Eine störungsfreie kontinuierliche Polymerisation in Gegenwart geringer Emulgatorkonzentrationen ist daher nicht möglich. Auch die kontinuierliche Polymerisation von Chloropren mit Hilfe eines Emulgatorsystems aus Salzen von disproportionierter Abietinsäure, Fettsäure und nichtionogenen Emulgatoren wie sie in der DE-A-2 520 339 beschrieben worden ist, führt nicht zum Ziel, da die nichtionogenen Emulgatoren die Polymerisation bremsen und die oben beschriebenen negativen Effekte auftreten.

In den deutschen Offenlegungsschriften 2 047 449 und 2 047 450 werden Verfahren zur Herstellung feststoffreicher Polychloropren-Latices beschrieben. Danach wird eine ausreichende kolloidale Stabilität des Latex während der Polymerisation nur dann erreicht, wenn man eine Kombination von 3 Emulgatoren und Dispergiermittel in genau definierten Konzentrationsbereichen einsetzt. Für eine ausreichende Latexstabilität ist es wesentlich, daß neben polymeren Fettsäuren nicht weniger als 1,5—2,0 Gew.-Teile eines Kondensationsproduktes aus Naphthalinsulfonsäure und Formaldehyd pro 100 Gew.-Teile Chloropren und nicht mehr als 1,5 Gew.-Teile einer disproportionierten Abietinsäure zugegeben sind. Diese Latices lassen sich jedoch nicht z. B. durch Gefrierkoagulation zum Festkautschuk aufarbeiten.

Produkte, die durch Elektrolytfällung erhalten wurden, verfärben sich jedoch stark bei der Trocknung. Es war daher überraschend festzustellen, daß man ohne Zusatz polymerer Fettsäuren und in Gegenwart geringer Mengen an Kondensationsprodukten aus Naphthalinsulfonsäuren und Formaldehyd die Latexstabilität während der kontinuierlichen Polymerisation verbessern, die Laufzeit der Polymerisationsanlage (selbst bei geringem Wasseranteil im Ansatz) wesentlich verlängern kann und leicht z. B. durch Gefrierkoagulation aufarbeitbare Latices erhält, wenn man die üblicherweise benutzte Natronlauge durch Kalilauge oder Mischungen anderer Alkalilaugen wie z. B. LiOH, KOH, CsOH ersetzt und die Na-Salze der Emulgatoren durch deren Kaliumsalze austauscht. Die Reaktionsgeschwindigkeit der kontinuierlich ablaufenden Polymerisation von Chloropren bei niedriger Emulgatorkonzentration kann durch die Wahl der Mischung verschiedener Alkalihydroxyde und ihrer Konzentration im Ansatz ausreichend gesteuert werden. Man erhält auf diese Weise stabile Latices, die nach der Aufarbeitung zum Klebstoff Produkte mit wesentlich verbesserten Rohmaterial- und Mischungseigenschaften zeigen.

Gegenstand der vorliegenden Erfindung ist somit ein Verfahren zur kontinuierlichen Polymerisation von Chloropren, das bis zu 30 Gew.-% eines oder mehrere Comonomere enthalten kann zu Polymerlatices in einer wäßrig-alkalischen Emulsion, die pro 100 Gew.-Teile Monomer 0,2—1,5 Gew.-Teile KOH, vorzugsweise 0,4—0,9 Gew.-Teile, 2,5—4,1 Gew.-Teile eines Kaliumsalzes der disproportionierten Abietinsäure (bezogen auf Säure) und 0,3—1,0 Gew.-Teile von Kondensationsprodukten aus Naphthalinsulfonsäure und Formaldehyd enthält. In der Emulsion, die 90 bis 150 Gew.-Teile Wasser, bevorzugt 100—130 Gew.-Teile pro 100 Gew.-Teile Monomer enthält, können bis zu 60 Gew.-% der Kaliumionen durch andere Alkaliionen wie z. B. $Li^{\oplus}$, $Na^{\oplus}$ ersetzt werden. Die exakte Konzentration an Kaliumionen die anwesend sein muß, ist abhängig von der mittleren Verweilzeit des polymerisierenden Chloroprens in der Kesselkaskade von der Konzentration an Emulgatoren und vom Wasseranteil im Ansatz, jedoch vom Fachmann leicht zu ermitteln. Das erfindungsgemäße Verfahren läßt sich mit Vorteil sowohl bei der diskontinuierlichen, als auch bei der kontinuierlichen Polymerisation des Chloroprens anwenden, wobei die Vorteile besonders bei der kontinuierlichen Arbeitsweise hervortreten.

Bei der Durchführung des Verfahrens kann Chloropren allein polymerisiert oder bis zu 30% durch eine andere mit Chloropren copolymerisierbare Verbindung ersetzt werden, wie z. B. Monovinylverbindungen (Acrylnitril, Methacrylnitril, Vinylidenchlorid, $\alpha$-Chloracrylnitril, Methacrylsäureester, Acrylsäureester), vinylsubstituierte aromatische Verbindungen (Styrol, Vinyltoluole) und konjugierte Dien-Verbindungen (Butadien-(1,3)), 1-Chlor-butadien-(1,3).

Die Polymerisation wird in wäßrig-alkalischer Emulsion in Anwesenheit radikalischer Initiatoren durchgeführt.

Vorzugsweise werden 2,8 bis 3,5 Gew.-Teile des Kaliumsalzes der disproportionierten Abietinsäure (bezogen auf Säure) und 0,4 bis 0,8 Gew.-Teile der Kondensationsprodukte aus Naphthalinsulfonsäure und Formaldehyd pro 100 Gew.-Teile Monomer eingesetzt. Die Latexstabilität kann gerade bei niedrigen Wasseranteilen im Ansatz durch Zugabe von 0,1—0,5 Teilen Na-Hexametaphosphat zusätzlich erhöht werden.

Zur Regelung des Molekulargewichtes werden Kettenüberträger wie Alkylmercaptane oder Dialkylxanthogendisulfide zugesetzt. Der Anteil des eingesetzten Mercaptans, z. B. Dodecylmercaptan, beeinflußt das Molekulargewicht des entstehenden Polymeren. Mit steigendem Anteil an Mercaptan verringert sich das mittlere Molekulargewicht des Polymeren, sichtbar an der sinkenden Mooney-Viskosität der Produkte.

Das Reaktionsprodukt besitzt einen für die Weiterverarbeitung günstigen Mooney-Bereich, wenn das Mercaptan in Mengen von 0,1—0,3 Gew.-Teilen pro 100 Gew.-Teile Monomer zugesetzt wird.

Die zur Erreichung einer gewünschten Polymerviskosität nötigen Mengen an Kettenüberträgern lassen sich vom Fachmann leicht ermitteln.

Verwendet man das erfindungsgemäße Emulgatorsystem, ist ein pH-Wert der Emulsion größer als 10 erforderlich. Es sollte vorzugsweise bei einem pH von 11—13,5 liegen.

Die Polymerisation wird durch Zugabe bekannter Polymerisationsinitiatoren gestartet und durchgeführt. Als Initiatoren kommen Radikale erzeugende Verbindungen in Frage, wie z. B. Alkalipersulfate, Wasserstoffperoxyd und organische Peroxyde wie Cumolhydroperoxid oder Benzoylperoxid oder Kombinationen, von Peroxyden mit Reduktionsmitteln wie Formamidinsulfinsäure.

Der Monomerumsatz sollte 85% nicht überschreiten. Er liegt üblicherweise bei 60 – 80%.

Die Temperaturführung während der Polymerisation kann zwischen 0 und 30° C variieren, wobei sich der Bereich von 10 – 20° C als günstig erwiesen hat. Inhibitoren wie Phenothiazin beenden die Polymerisation. Das restliche nicht umgesetzte Monomere kann durch Wasserdampfdestillation entfernt werden. Der pH des alkalischen Latex wird durch verdünnte Essigsäure auf pH 5 – 7 gesenkt, bevorzugt pH 6,0 – 6,5 und das Polymere aus dieser Emulsion beispielsweise durch Gefrierkoagulation isoliert und getrocknet, wie z. B. beschrieben in Chem. Engng. Progr. 43, 391 (1974) und in der DE-C 1 051 506. Für die Aufarbeitung eignen sich aber auch andere herkömmliche Methoden, wie z. B. in der DE-C 1 111 804 beschrieben.

Die Herstellung von Polychloroprenlösungen und von Klebstoffen auf Grundlage dieser Lösungen erfolgt nach bekannten Verfahren, wie z. B. in DE-A 1 200 988 beschrieben.

Die folgenden Beispiele erläutern die Erfindung:

## Beispiel 1

### (Vergleichsbeispiel)

In den ersten Reaktor einer Polymerisationskaskade, bestehend aus 7 gleichen Reaktoren mit einem Volumen von je 50 Liter werden die wäßrige Phase (W) und die Monomerphase (M) über eine Meß- und Regelapparatur in sets konstantem Verhältnis sowie die Aktivatorphase (A) eingefahren. Die mittlere Verweilzeit je Kessel beträgt 30 Minuten. (Es wurden Reaktoren verwendet wie in DOS 2 650 714 beschrieben).

| | |
|---|---|
| (M) = Monomerphase: | |
| Chloropren | 100,0 Gew.-Teile |
| n-Dodecylmercaptan | 0,13 Gew.-Teile |
| Phenothiazin | 0,015 Gew.-Teile |
| (W) = wäßrige Phase: | |
| Entsalztes Wasser | 150,0 Gew.-Teile |
| Natriumsalz einer disproportionierten Abietinsäure | 6,0 Gew.-TEile |
| Natriumsalz eines Kondensationsproduktes aus Naphthalinsulfonsäure und Formaldehyd | 0,7 Gew.-Teile |
| Ätznatron | 0,63 Gew.-Teile |
| (A) = Aktivatorphase: | |
| 1gew.-%ige wäßrige Formamidinsulfinsäure | 0,07 Gew.-Teile |
| Kaliumpersulfat | 0,05 Gew.-Teile |
| Anthrachinon-2-sulfonsäure-Na | 0,005 Gew.-Teile |

Bei einer Innentemperatur von 15° C springt die Reaktion im 1. Kessel der Kaskade an. Durch eine Außenkühlung wird die freiwerdende Polymerisationswärme abgeführt und die Polymerisationstemperatur auf 10° C erniedrigt. Bei einem Monomerumsatz von 80% wird die Reaktion durch Zugabe von Phenothiazin abgebrochen. Das restliche Monomere wird durch Wasserdampfdestillation aus dem Polymeren entfernt und der Polymerlatex nach Senken des pH-Wertes auf 6,0 auf einer Kühlwalze ausgefroren und isoliert. Das koagulierte Polymere ist brüchig und läßt sich nur schwer trocknen. Die Mooney-Viskosität des Polymeren liegt bei ML-4 = 100 ME. Nach einer Polymerisationszeit von 4 Tagen wird die Polymerisationsstraße ausgefahren. In den Reaktoren hat sich in diesem Zeitraum 10 kg an polymeren Ausscheidungen angesammelt.

## Beispiel 2

### Verringerung der Emulgatorkonzentration (Vergleichsbeispiel)

Es wird wie im Vergleichsbeispiel 1 polymerisiert, jedoch mit einer wäßrigen Phase, die statt 6,0 Gew.-Teile jetzt 3,2 Gew.-Teile eines Na-Salzes einer disproportionierten Abietinsäure enthält. Die Polymerisation verläuft nur langsam und der angestrebte Monomerumsatz von 80% kann selbst durch eine wesentlich höhere Aktivatordosierung (vgl. Tab. 1) nicht erreicht werden. Nach einer Laufzeit von

20 Stunden muß die Polymerisation abgebrochen werden, da das Rohrleitungssystem zwischen den Kesseln durch Ausscheidungen verstopft ist. Es wurden 42 kg an Koagulat aus der Anlage entfernt.

Beispiel 3

Verringerung des Wasseranteils im Ansatz (Vergleichsbeispiel)

Es wird wie im Beispiel 1 verfahren, nur enthält die wäßrige Phase statt 150 Gew.-Teile Wasser jetzt 120 Gew.-Teile. Die Polymerisation wird nach 4 Tagen abgebrochen. In den Kesseln hat sich 22 kg an polymeren Ausscheidungen angesammelt. Im Latex bilden sich nach einer Lagerzeit von 3 Tagen die ersten Ausscheidungen. Der pH-Wert des Latex kann nicht für die Aufarbeitung auf pH 6,0 gesenkt werden, da das Polymere schon bei pH 7 koaguliert und ausfällt. Die Isolierung erfolgt daher bei pH 7,4. Das getrocknete Polymere hat eine Mooney-Viskosität von ML-4 = 95 ME.

Beispiel 4

Geringere Wasser- und Emulgatorkonzentration im Ansatz (Vergleichsbeispiel)

Man verfährt wie in Beispiel 1, verringert jedoch den Emulgatorgehalt auf 4 Gew.-Teile und den Wasseranteil auf 110 Gew.-Teile. Der Monomerumsatz liegt trotz hohem Aktivatorverbrauch nur bei 55%. Die Polymerisation wird nach 18 Stunden abgebrochen, die Ausscheidungen in den Kesseln betragen 46 kg.

Beispiel 5

(KOH als Alkalikomponente)

Man verfährt wie in Beispiel 1 und ersetzt nur in der wäßrigen Phase (W) die Natronlauge durch äquimolare Mengen an Kalilauge. Die Polymerisation läuft bei geringerem Aktivatorverbrauch gleichmäßiger und die Reaktoren enthalten nach einer Polymerisationszeit von 8 Tagen keine Ausscheidungen. Die Mooney-Viskosität des Polymeren liegt bei ML-4 = 103 ME.

Beispiel 6

Verringerung der Emulgatorkonzentration

Man verfährt wie in Beispiel 2 und ersetzt die Natronlauge durch äquimolare Mengen an Kalilauge. Der Monomerumsatz von 80% wird bei niedrigem Aktivatorverbrauch erreicht. Die Reaktoren enthalten nach einer Polymerisationszeit von 8 Tagen keine Ausscheidungen. Die Mooney-Viskosität des Polymeren liegt bei ML-4 = 100 ME.

Beispiel 7

Verringerung des Wasseranteils im Ansatz

Man verfährt wie in Beispiel 3 und ersetzt die Natronlauge durch äquimolare Mengen an Kalilauge. Die Reaktoren enthalten nach einer Polymerisationszeit von 8 Tagen 4 kg Ausscheidungen. Die Mooney-Viskosität des Polymeren liegt bei ML-4 = 98 ME.

Beispiel 8

Geringere Wasser- und Emulgatorkonzentration im Ansatz

Man verfährt wie im Beispiel 4 und ersetzt Natronlauge durch äquimolare Mengen an Kalilauge. Die Reaktoren enthalten nach einer Polymerisationszeit von 8 Tagen 1 kg Ausscheidungen. Der Latex ist lagerstabil und kann bei pH 6 auf der Kühlwalze ausgefroren und isoliert werden. Das koagulierte Polymere ist elastisch und läßt sich leicht trocknen. Die Mooney-Viskosität des Polymeren liegt bei ML-4 = 101 ME.

Beispiel 9

Geringere Wasser- und Emulgatorkonzentration im Ansatz und Ersatz der Na-Ionen gegen K-Ionen

Man verfährt wie im Beispiel 8 und ersetzt die Natronsalze der Emulgatoren durch äquimolare Mengen an Kaliumsalzen. Die Polymerisation verläuft bei geringerem Aktivatorverbrauch problemlos und die Polymerisationsgefäße enthalten nach einer Polymerisationszeit von 8 Tagen keine Ausscheidungen. Die Aufarbeitung erfolgt wie im Beispiel 8 beschrieben. Die Mooney-Viskosität des Polymeren liegt bei ML-4 = 104 ME.

Tabelle 1

Aktivatorverbrauch bei unterschiedlichen Alkaliionen im Ansatz

| Beispiel | Wasser im Ansatz (Gew.-Teile) | Emulgator[1] (Gew.-Teile) | $Na^{\oplus}$ [2] ($10^{-2}$) | $K^{\oplus}$ [2] ($10^{-2}$) | Aktivator-[3] verbrauch in den Reaktionsgef. 1 | 2–7 | Monomer-Umsatz (%) |
|---|---|---|---|---|---|---|---|
| 1 | 150 | 6,0 | 3,45 | 0 | 0,06 | 0,01 | 80 |
| 2 | 150 | 3,2 | 2,59 | 0 | 0,10 | 0,13 | 72 |
| 3 | 120 | 6,0 | 3,45 | 0 | 0,06 | 0,02 | 80 |
| 4 | 110 | 4,0 | 3,10 | 0 | 0,11 | 0,14 | 55 |
| 5 | 150 | 6,0 | 1,85 | 1,60 | 0,011 | 0,017 | 80 |
| 6 | 150 | 3,2 | 1,00 | 1,60 | 0,012 | 0,018 | 80 |
| 7 | 120 | 6,0 | 1,85 | 1,60 | 0,010 | 0,008 | 80 |
| 8 | 110 | 4,0 | 1,50 | 1,60 | 0,011 | 0,005 | 80 |
| 9 | 110 | 4,0 | 0 | 3,10 | 0,009 | 0,002 | 80 |

[1]) Na-Salz der disproportionierten Abietinsäure.
[2]) Angabe in Mol/100 Teile Monomer.
[3]) 1 gew.-%ige wäßrige Formamidinsulfinsäure.

Wie in den Beispielen 1–8 gezeigt wird, führt in Gegenwart von $Na^{\oplus}$-Ionen sowohl eine Verringerung der Emulgatorkonzentration (Beispiel 2) als auch ein geringerer Wasseranteil im Ansatz (Beispiel 3) oder beides (Beispiel 4) zu starken Ausscheidungen in den Polymerisationskesseln und zu einem frühzeitigen Abbruch der kontinuierlichen Polymerisation. Der angestrebte Monomerumsatz wird kaum oder gar nicht erreicht. Schon ein teilweiser Ersatz der $Na^{\oplus}$ durch $K^{\oplus}$-Ionen (Beispiel 5–8) behebt diese Schwierigkeiten. Man erhält lagerstabile Latices, die sich problemlos aufarbeiten lassen. Bei völligem Ersatz der $Na^{\oplus}$- durch $K^{\oplus}$-Ionen im Ansatz (Beispiel 9) wird der angestrebte Monomerumsatz bei geringem Aktivatorverbrauch mühelos erreicht. Die kontinuierlich arbeitende Polymerisationsanlage kann längere Zeit völlig ausscheidungsfrei betrieben werden.

Beispiel 10

Topfzeit

25 g des in den Beispielen 1, 3 und 5–9 hergestellten Polychloroprens wurden in 125 g eines Lösungsmittelgemisches aus Ethylacetat, Benzin 65/95, Toluol (Gewichtsverhältnis 2 : 2 : 1) unter Rühren mit einem Laborrührer mit 600 UpM gelöst. Die so erhaltenen Klebstoffe wurden auf eine Viskosität von 1,5 Pas gemessen bei 20° C mit einem Brookfield LVT-Viskosimeter (Spindel 4, 30 UpM), durch Zugabe weiterer Mengen des gleichen Lösungsmittelgemisches verdünnt. In dieser Lösung wurden 7,5 g einer 20%igen Lösung von Thiophosphorsäure-tris-(p-iso-cyanatophenylester) in

Methylenchlorid gut eingemischt und die Viskosität dieser Klebstoffmischung mit einem Brookfield LVT-Viskosimeter (Spindel 4, bei 60 UpM) in 30 Sekunden bestimmt. Die Flasche wurde darauf bei 20° C und 65% relativer Luftfeuchtigkeit gelagert und der Viskositätsanstieg der Mischung durch stündliches Messen mit dem Brookfield LVT-Viskosimeter ermittelt, bis ein Anstieg der Ausgangsviskosität um 50% erreicht wurde.

| Polychloropren nach Beispiel | Lösungsviskosität (Pas)+) sofort | Viskositätsanstieg über 50% nach (h) |
|---|---|---|
| 1++) | 1,5 | 4 |
| 3++) | 1,5 | 2,5 |
| 5 | 1,5 | 4 |
| 6 | 1,5 | 12 |
| 7 | 1,5 | 4 |
| 8 | 1,5 | 8 |
| 9 | 1,5 | 12 |

+) Gemessen bei 20°C mit einem Brookfield LVT-Viskosimeter (Spindel 4, 30 UpM).
++) Vergleichsbeispiele.

**Patentansprüche**

1. Verfahren zur Herstellung eines Klebstoffes auf der Basis eines Polychloroprenrohstoffes durch Lösung des Rohstoffes in üblichen Klebstofflösungsmitteln wobei der Klebstoffrohstoff durch kontinuierliche Polymerisation von Chloropren, das bis zu 30 Gew.-% eines oder mehrere Comonomere enthalten kann, in wäßriger alkalischer Emulsion in Gegenwart von Emulgatoren und radikalischen Initiatoren bei Temperaturen von 0—30° C und anschließender Isolierung erhalten wird, dadurch gekennzeichnet, daß bei der Polymerisation 90 bis 150 Gew.-Teile Wasser, 2,5—4,1 Gew.-Teile eines Kaliumsalzes der disproportionierten Abietinsäure (bezogen auf Säure), 0,3—1,0 Gew.-Teile eines Kondensationsproduktes aus Naphthalinsulfonsäure und Formaldehyd und 0,2—1,5 Gew.-Teile Kaliumhydroxid, alle Angaben bezogen auf 100 Gew.-Teile Monomer eingesetzt werden, wobei bis zu 60 Gew.-% der Kaliumionen durch andere Alkaliionen ersetzt sein können.

2. Verfahren nach Anspruch 1, dadurch gekennzeichnet, daß die Alkalisalze der disproportionierten Abietinsäure in Mengen von 2,8 bis 3,5 Gew.-Teile je 100 Gew.-Teile Monomer zugegeben werden.

3. Verfahren nach Anspruch 1, dadurch gekennzeichnet, daß das Kondensationsprodukt aus Naphthalinsulfonsäure und Formaldehyd in Mengen von 0,4 bis 0,8 Gew.-Teile je 100 Gew.-Teile Monomer zugegeben wird.

4. Verfahren nach Anspruch 1, dadurch gekennzeichnet, daß 0,4—0,9 Gew.-Teile Kaliumhydroxid je 100 Gew.-Teile Monomer zugegeben wird.

5. Verfahren nach Anspruch 1, dadurch gekennzeichnet, daß 100—130 Gew.-Teile Wasser je 100 Gew.-Teile Monomer zugegeben wird.

6. Verfahren nach Ansprüchen 1 bis 5, dadurch gekennzeichnet, daß man bei Temperaturen von 10—20° C polymerisiert.

7. Verfahren nach Ansprüchen 1 bis 6, dadurch gekennzeichnet, daß man den Polymerlatex bei pH Werten von 5—7 aufarbeitet.

8. Verfahren nach Ansprüchen 1 bis 6, dadurch gekennzeichnet, daß man den Polymerlatex bei pH Werten von 6,0—6,5 aufarbeitet.

9. Klebstoff auf Basis eines Polychloroprenklebstoffrohstoffes, der nach dem Verfahren gemäß Ansprüchen 1 bis 8 hergestellt worden ist.

**Claims**

1. Process for the production of an adhesive based on a polychloroprene raw material by dissolving the raw material in conventional adhesive solvents, the raw material for the adhesive being obtained

by the continuous polymerisation of chloroprene, which can contain up to 30% by weight of one or more comonomers, in aqueous alkaline emulsion in the presence of emulsifiers and radical initiators at temperatures of 0–30°C, followed by isolation, characterised in that 90 to 150 parts by weight of water, 2.5–4.1 parts by weight of a potassium salt of disproportionated abietic acid (based on acid), 0.3–1.0 parts by weight of a condensation product of naphthalene sulphonic acid and formaldehyde and 0.2–1.5 parts by weight of potassium hydroxide, all quantities being based on 100 parts by weight of monomer, are used during the polymerisation, it being possible for up to 60% by weight of the potassium ions to be replaced by other alkali metal ions.

2. Process according to Claim 1, characterised in that the alkali metal salts of disproportionated abietic acid are added in quantities of 2.8 to 3.5 parts by weight per 100 parts by weight of monomer.

3. Process according to Claim 1, characterised in that the condensation product of naphthalene sulphonic acid and formaldehyde is added in quantities of 0.4 to 0.8 parts by weight per 100 parts by weight of monomer.

4. Process according to Claim 1, characterised in that 0.4–0.9 parts by weight of potassium hydroxide is added per 100 parts by weight of monomer.

5. Process according to Claim 1, characterised in that 100–130 parts by weight of water are added per 100 parts by weight of monomer.

6. Process according to Claims 1 to 5, characterised in that polymerisation is carried out at temperatures of 10–20°C.

7. Process according to Claims 1 to 6, characterised in that the polymer latex is worked up at pH values of 5–7.

8. Process according to Claims 1 to 6, characterised in that the polymer latex is worked up at pH values of 6.0–6.5.

9. An adhesive based on a polychloroprene adhesive raw material which has been produced by the process according to Claims 1 to 8.

**Revendications**

1. Procédé de préparation d'un adhésif à base d'une matière première de polychloroprène en dissolvant cette matière première dans des solvants habituels d'adhésifs, la matière première adhésive étant obtenue par polymérisation en continu de chloroprène pouvant contenir jusqu'à 30% en poids d'un ou plusieurs comonomères, en émulsion alcaline aqueuse en présence d'émulsionnants et d'initiateurs radicalaires à des températures de 0 à 30°C, puis par isolation, caractérisé en ce que, lors de la polymérisation, on utilise 90 à 150 parties en poids d'eau. 2,5–4,1 parties en poids d'un sel de potassium de l'acide abiétique disproportionné (calculé sur l'acide), 0,3–1 partie en poids d'un produit de condensation d'acide naphtalène-sulfonique et de formaldéhyde, ainsi que 0,2–1,5 partie en poids d'hydroxyde de potassium, toutes les quantités indiquées étant rapportées à 100 parties en poids du monomère, jusqu'à 60% en poids des ions potassium pouvant être remplacés par d'autres ions alcalins.

2. Procédé suivant la revendication 1, caractérisé en ce qu'on ajoute les sels alcalins de l'acide abiétique disproportionné en quantités de 2,8 à 3,5 parties en poids par 100 parties en poids de monomère.

3. Procédé suivant la revendication 1, caractérisé en ce qu'on ajoute le produit de condensation d'acide naphtalène-sulfonique et de formaldéhyde en quantités de 0,4 à 0,8 partie en poids par 100 parties en poids de monomère.

4. Procédé suivant la revendication 1, caractérisé en ce qu'on ajoute 0,4 à 0,9 partie en poids d'hydroxyde de potassium par 100 parties en poids de monomère.

5. Procédé suivant la revendication 1, caractérisé en ce qu'on ajoute 100 à 130 parties en poids d'eau par 100 parties en poids de monomère.

6. Procédé suivant les revendications 1 à 5, caractérisé en ce qu'on effectue la polymérisation à des températures de 10–20°C.

7. Procédé suivant les revendications 1 à 6, caractérisé en ce qu'on traite le latex polymère à des pH de 5–7.

8. Procédé suivant les revendications 1 à 6, caractérisé en ce qu'on traite le latex polymère à des pH de 6–6,5.

9. Adhésif à base d'une matière première adhésive de polychloroprène que l'on prépare par le procédé suivant les revendications 1 à 8.